# EUROPEAN PATENT APPLICATION

(11) **EP 4 803 964 A1**
(43) Date of publication of application: **09.09.2026**
(21) Application number: 26157462.8
(22) Date of filing: 10.02.2026
(51) Int. Cl.: G05B 11/36, G05B 13/04

(54) **METHOD, APPARATUS AND COMPUTER PROGRAM PRODUCT FOR PERFORMING PLANT OPTIMIZATION ACTIONS BASED ON A DETERMINED FEASIBLE OPERATING REGION OF A SECONDARY CONTROLLER**

(30) Priority: 04.03.2025 US 202519069817
(71) Applicant: Honeywell International Inc., Charlotte, NC 28202 (US)
(72) Inventor: LU, Joseph, Charlotte, 28202 (US)
(74) Representative: Houghton, Mark Phillip

(57) **Abstract**

The invention concerns methods, an apparatus and a computer program product for determining, using a master controller, a first optimization request bandwidth for a feasible operating region associated with a secondary controller, including generating, using the master controller, a first optimization request for the first optimization request bandwidth and transmitting, using the master controller, the first optimization request to the secondary controller. The master controller receives a first limit position of a set of limit positions from the secondary controller and estimates a feasible operating region based on the first limit position in order to perform one or more plant optimization actions based on the estimated feasible operating region.

## Description

### TECHNOLOGICAL FIELD

Embodiments of the present disclosure relate generally to systems, apparatuses, methods, and computer program products for enabling performance of one or more plant optimization actions.

### BACKGROUND

Applicant has identified many technical challenges and difficulties associated with systems, apparatuses, methods, and computer program products for optimizing a plant. Through applied effort, ingenuity, and innovation, Applicant has solved problems related to systems, apparatuses, methods, and computer program products for optimizing a plant by developing solutions embodied in the present disclosure, which are described in detail below.

### BRIEF SUMMARY

Various embodiments described herein relate to systems, apparatuses, methods, and computer program products for enabling performance of one or more plant optimization actions.

In accordance with one aspect of the disclosure a method is provided. In some embodiments, the method comprises determining, using a master controller, a first optimization request bandwidth for a feasible operating region associated with a secondary controller. In some embodiments, the method comprises generating, using the master controller, a first optimization request for the first optimization request bandwidth. In some embodiments, the first optimization request comprises a set of optimization inquiries. In some embodiments, a first optimization inquiry of the set of optimization inquiries corresponds to a first subsidiary movement direction and a second optimization inquiry of the set of optimization inquiries corresponds to a second subsidiary movement direction. In some embodiments, the first subsidiary movement direction and the second subsidiary movement direction are within the first optimization request bandwidth. In some embodiments, the method comprises transmitting, using the master controller, the first optimization request to the secondary controller. In some embodiments, the method comprises receiving, at the master controller, a first limit position of a set of limit positions from the secondary controller. In some embodiments, the method comprises determining, using the master controller, an estimated feasible operating region based on the first limit position. In some embodiments, the method comprises enabling the master controller to perform one or more plant optimization actions based on the estimated feasible operating region.

In some embodiments, at least one of the set of limit positions is defined by one or more of a set of secondary controller manipulated variables associated with the secondary controller.

In some embodiments, determining the first optimization request bandwidth comprises determining a high limit for at least one secondary controller manipulated variable of the set of secondary controller manipulated variables.

In some embodiments, determining the first optimization request bandwidth comprises determining a low limit for the at least one secondary controller manipulated variable of the set of secondary controller manipulated variables.

In some embodiments, determining the first optimization request bandwidth comprises determining the first optimization request bandwidth using the high limit for the at least one secondary controller manipulated variable and the low limit for the at least one secondary controller manipulated variable.

In some embodiments, determining the first optimization request bandwidth comprises determining a movement distance to at least one limit associated with at least one of the set of secondary controller manipulated variables from an operating point of the set of secondary controller manipulated variables.

In some embodiments, determining the first optimization request bandwidth comprises determining the first optimization request bandwidth using the movement distance to the at least one limit associated with the at least one of the set of secondary controller manipulated variables.

In some embodiments, a first secondary controller manipulated variable of the set of secondary controller manipulated variables is a conjoint manipulated variable with a first master controller manipulated variable of a set of master controller manipulated variables associated with the master controller.

In some embodiments, the method comprises determining a second optimization request bandwidth for the feasible operating region associated with the secondary controller

In some embodiments, the method comprises generating a second optimization request for the second optimization request bandwidth.

In some embodiments, the second optimization request comprises an additional set of optimization inquiries.

In some embodiments, a first additional optimization inquiry of the additional set of optimization inquiries corresponds to a first additional subsidiary movement direction and a second additional optimization inquiry of the additional set of optimization inquiries corresponds to a second additional subsidiary movement direction.

In some embodiments, the first additional subsidiary movement direction and the second additional subsidiary movement direction are within the second optimization request bandwidth.

In some embodiments, the method comprises transmitting, using the master controller, the second optimization request to the secondary controller.

In some embodiments, the method comprises receiving, at the master controller, a first additional limit position of an additional set of limit positions from the secondary controller.

In some embodiments, the method comprises determining, using the master controller, the estimated feasible operating region based on the first additional limit position.

In some embodiments, the first optimization request bandwidth corresponds to a first movement direction from an operating point of a set of secondary controller manipulated variables towards at least a first limit associated with at least one secondary controller manipulated variable of the set of secondary controller manipulated variables.

In some embodiments, the second optimization request bandwidth corresponds to a second movement direction from the operating point of the set of secondary controller manipulated variables towards at least a second limit associated with at least one secondary controller manipulated variable of the set of secondary controller manipulated variables or at least one other secondary controller manipulated variable of the set of secondary controller manipulated variables.

In some embodiments, when the first optimization request bandwidth meets or is below a first width threshold, the first optimization request corresponds to a pinched optimization request.

In some embodiments, when the first optimization request bandwidth meets or exceeds a second width threshold, the first optimization request corresponds to a full optimization request.

In some embodiments, increasing a width of the first optimization request bandwidth increases an area of the estimated feasible operating region.

In some embodiments, enabling the master controller to perform the one or more plant optimization actions comprises actuating at least one of a physical processing unit of a plant or a physical stream of the plant.

In some embodiments, actuating at least one of the physical processing unit of the plant or the physical stream of the plant causes a flow rate in at least one physical stream of the plant to increase or decrease.

In some embodiments, enabling the master controller to perform the one or more plant optimization actions comprises generating an adjustment feature for a first master controller manipulated variable of a set of master controller manipulated variables associated with the master controller.

In some embodiments, enabling the master controller to perform the one or more plant optimization actions causes a reduction in a movement distance between an operating point of a set of secondary controller manipulated variables and an optimal operating point of the set of secondary controller manipulated variables.

In accordance with another aspect of the disclosure, an apparatus is provided. In some embodiments, the apparatus includes memory and one or more processors communicatively coupled to the memory. In some embodiments, the one or more processors are configured to perform operations comprising determining, using a master controller, a first optimization request bandwidth for a feasible operating region associated with a secondary controller. In some embodiments, the one or more processors are configured to perform operations comprising generating, using the master controller, a first optimization request for the first optimization request bandwidth. In some embodiments, the first optimization request comprises a set of optimization inquiries. In some embodiments, a first optimization inquiry of the set of optimization inquiries corresponds to a first subsidiary movement direction and a second optimization inquiry of the set of optimization inquiries corresponds to a second subsidiary movement direction. In some embodiments, the first subsidiary movement direction and the second subsidiary movement direction are within the first optimization request bandwidth. In some embodiments, the one or more processors are configured to perform operations comprising transmitting, using the master controller, the first optimization request to the secondary controller. In some embodiments, the one or more processors are configured to perform operations comprising receiving, at the master controller, a first limit position of a set of limit positions from the secondary controller. In some embodiments, the one or more processors are configured to perform operations comprising determining, using the master controller, an estimated feasible operating region based on the first limit position. In some embodiments, the one or more processors are configured to perform operations comprising enabling the master controller to perform one or more plant optimization actions based on the estimated feasible operating region.

In some embodiments, at least one of the set of limit positions is defined by one or more of a set of secondary controller manipulated variables associated with the secondary controller.

In some embodiments, determining the first optimization request bandwidth comprises determining a high limit for at least one secondary controller manipulated variable of the set of secondary controller manipulated variables.

In some embodiments, determining the first optimization request bandwidth comprises determining a low limit for the at least one secondary controller manipulated variable of the set of secondary controller manipulated variables.

In some embodiments, determining the first optimization request bandwidth comprises determining the first optimization request bandwidth using the high limit for the at least one secondary controller manipulated variable and the low limit for the at least one secondary controller manipulated variable.

In some embodiments, determining the first optimization request bandwidth comprises determining a movement distance to at least one limit associated with at least one of the set of secondary controller manipulated variables from an operating point of the set of secondary controller manipulated variables.

In some embodiments, determining the first optimization request bandwidth comprises determining the first optimization request bandwidth using the movement distance to the at least one limit associated with the at least one of the set of secondary controller manipulated variables.

In some embodiments, a first secondary controller manipulated variable of the set of secondary controller manipulated variables is a conjoint manipulated variable with a first master controller manipulated variable of a set of master controller manipulated variables associated with the master controller.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for determining, using a master controller, a first optimization request bandwidth for a feasible operating region associated with a secondary controller. In some embodiments, the computer program code, in execution with at least one processor, configures the computer program product for generating, using the master controller, a first optimization request for the first optimization request bandwidth. In some embodiments, the first optimization request comprises a set of optimization inquiries. In some embodiments, a first optimization inquiry of the set of optimization inquiries corresponds to a first subsidiary movement direction and a second optimization inquiry of the set of optimization inquiries corresponds to a second subsidiary movement direction. In some embodiments, the first subsidiary movement direction and the second subsidiary movement direction are within the first optimization request bandwidth. In some embodiments, the computer program code, in execution with at least one processor, configures the computer program product for transmitting, using the master controller, the first optimization request to the secondary controller. In some embodiments, the computer program code, in execution with at least one processor, configures the computer program product for receiving, at the master controller, a first limit position of a set of limit positions from the secondary controller. In some embodiments, the computer program code, in execution with at least one processor, configures the computer program product for determining, using the master controller, an estimated feasible operating region based on the first limit position. In some embodiments, the computer program code, in execution with at least one processor, configures the computer program product for enabling the master controller to perform one or more plant optimization actions based on the estimated feasible operating region.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an exemplary block diagram of an environment in which embodiments of the present disclosure may operate;
FIG. 2 illustrates an exemplary block diagram of an example apparatus that may be specially configured in accordance with an example embodiment of the present disclosure;
FIG. 3 illustrates a flow sheet model in accordance with one or more embodiments of the present disclosure;
FIG. 4 illustrates an example master controller manipulated variable space in accordance with one or more embodiments of the present disclosure;
FIG. 5 illustrates an example master controller manipulated variable space in accordance with one or more embodiments of the present disclosure;
FIG. 6 illustrates an example optimization request bandwidth in accordance with one or more embodiments of the present disclosure;
FIG. 7 illustrates an example optimization request bandwidth in accordance with one or more embodiments of the present disclosure;
FIG. 8 illustrates a flowchart of an example method in accordance with one or more embodiments of the present disclosure;
FIG. 9 illustrates a flowchart of an example method in accordance with one or more embodiments of the present disclosure;
FIG. 10 illustrates a flowchart of an example method in accordance with one or more embodiments of the present disclosure; and
FIG. 11 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with systems, apparatuses, methods, and computer program products for optimizing a plant. As would be understood by one skilled in the field to which this disclosure pertains, there are numerous example scenarios in which systems, apparatuses, methods, and computer program products for optimizing a plant are desirable.

In many applications it may be desirable to use systems, apparatuses, methods, and computer program products for optimizing a plant. For example, it may be desirable to use systems, apparatuses, methods, and computer program products for optimizing a plant to improve the efficiency of the plant. As another example, it may be desirable to use systems, apparatuses, methods, and computer program products for optimizing a plant to control the emissions of the plant. As another example, it may be desirable to use systems, apparatuses, methods, and computer program products for optimizing a plant to control how much processed product the plant produces. As another example, it may be desirable to use systems, apparatuses, methods, and computer program products for optimizing a plant to control when a plant makes particular processed products instead of other processed products. As another example, it may be desirable to use systems, apparatuses, methods, and computer program products for optimizing a plant to control what particular processed products a plant makes instead of other processed products. As another example, it may be desirable to use systems, apparatuses, methods, and computer program products for optimizing a plant to manage maintenance actions associated with the plant.

Example solutions for optimizing a plant include using a computing device to control the operations of the plant. However, such example solutions are technically deficient and reactive. For example, such example solutions are technically deficient because such example solutions are unable to implement a framework for considering limits (e.g., proxy limits) of secondary controllers that have one or more conjoint manipulated variables with a master controller. As a result, such example solutions, are unable to implement a master controller that considers the constraints of secondary controllers when the master controller is optimizing a plant through various control actions that alter one or more of the conjoint manipulated variables. As another example, such example solutions are technically deficient because such example solutions are unable to implement an optimization request bandwidth approach for determining limits of secondary controllers. As a result, such example solutions use excessive processing power and have excessive memory consumption due to inefficient approaches, such as a full method, for determining limits of secondary controllers. As another example, such example solutions are reactive because such example solutions are unable to automatically implement plant optimization actions, such as plant optimization actions that include actuating at least one of a physical processing unit of a plant or a physical stream of the plant. Accordingly, there is a need for systems, apparatuses, methods, and computer program products that are able optimize a plant in a technically sufficient and proactive manner.

Thus, to address these and/or other issues related to such example solutions, example systems, apparatuses, methods, and computer program products for enabling performance of one or more plant optimization actions are disclosed herein. For example, an embodiment in this disclosure, described in greater detail below, includes a method that includes determining, using a master controller, a first optimization request bandwidth for a feasible operating region associated with a secondary controller. In some embodiments, the method comprises generating, using the master controller, a first optimization request for the first optimization request bandwidth. In some embodiments, the first optimization request comprises a set of optimization inquiries. In some embodiments, a first optimization inquiry of the set of optimization inquiries corresponds to a first subsidiary movement direction and a second optimization inquiry of the set of optimization inquiries corresponds to a second subsidiary movement direction. In some embodiments, the first subsidiary movement direction and the second subsidiary movement direction are within the first optimization request bandwidth. In some embodiments, the method comprises transmitting, using the master controller, the first optimization request to the secondary controller. In some embodiments, the method comprises receiving, at the master controller, a first limit position of a set of limit positions from the secondary controller. In some embodiments, the method comprises determining, using the master controller, an estimated feasible operating region based on the first limit position. In some embodiments, the method comprises enabling the master controller to perform one or more plant optimization actions based on the estimated feasible operating region. Accordingly, the systems, apparatuses, methods, and computer program products provided herein are able optimize a plant in a technically sufficient and proactive manner.

### Example Systems and Apparatuses

Embodiments of the present disclosure herein include systems, apparatuses, methods, and computer program products configured for enabling performance of one or more plant optimization actions. It should be readily appreciated that the embodiments of the apparatus, systems, methods, and computer program product described herein may be configured in various additional and alternative manners in addition to those expressly described herein.

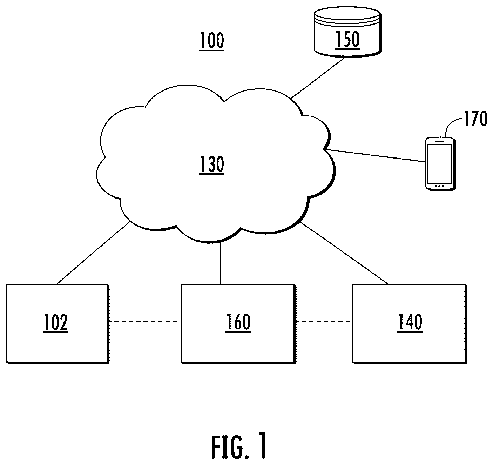

FIG. 1 illustrates an exemplary block diagram of an environment 100 in which embodiments of the present disclosure may operate. Specifically, FIG. 1 illustrates a plant 102. In some embodiments, for example, the plant 102 may be any type of plant associated with the environment 100. In this regard, the plant 102 may, for example, be a processing plant that receives and processes input ingredients to create a processed product, such as a hydrocarbon processing plant, a refinery, a pulp and paper plant, a chemical plant, an alumina plant, a drilling facility, a fracking field, and/or the like.

The plant 102 in some embodiments includes any number of individual physical processing units. The physical processing units of the plant 102 may perform a particular function during operation of the plant 102. For example, the physical processing units may include one or more well physical processing units, fracking physical processing units, crude processing physical processing units (e.g., crude processing physical processing units having a vacuum section), hydrotreating physical processing units, isomerization physical processing units, reforming physical processing units, vapor recovery physical processing units, fluid catalytic cracking physical processing units, batch blending physical processing units, rundown blending physical processing units, hydrocracking physical processing units, alkylation physical processing units, dewaxing physical processing units, deasphalter physical processing units (e.g., propane deasphalter physical processing units), aromatics reduction physical processing units, delayed cooker physical processing units, visbreaker physical processing units, digester physical processing units, thermomechanical grinding physical processing units, bleaching physical processing units, blender physical processing units, pump physical processing units, flash venting physical processing units, compressor physical processing units, cooler physical processing units (e.g., air cooler physical processing units), sensor physical processing units, , flare physical processing units, heating, ventilation, and air (HVAC) physical processing units, lighting physical processing units, and/or the like that perform a particular operation for transforming, separating, reacting, reforming, digesting, bleaching, storing, releasing, and/or otherwise handling one or more input ingredients, intermediate ingredients, and/or processed products (e.g., hydrocarbons, gases, etc.). In this regard, for example, the individual physical processing units of the plant 102 may include physical processing units associated with a particular process performed by the plant 102.

The plant 102 in some embodiments includes any number of individual physical streams. The physical streams of the plant 102 may perform a particular function during operation of the plant 102. For example, the physical streams may include one or more liquefied petroleum gas physical streams, straight-run gasoline physical streams, naphtha physical streams, middle distillates physical streams, crude physical streams, heavy atmospheric gasoil physical streams, vacuum gasoil physical streams, lube base stocks physical streams, fuel gas physical streams, light gasoil physical streams, gasoline physical streams, fractionator bottoms physical streams, fuel oil physical streams, asphalt physical streams, refinery fuel physical streams, regular gasoline physical streams, solvents physical streams, aviation fuel physical streams, diesel physical streams, heating oil physical streams, lube oil physical streams, grease physical streams, industrial fuel physical streams, wood chip physical streams, brown stock physical streams, white liquor physical streams, bleached pulp physical streams, and/or the like that perform a particular operation for transforming, storing, releasing, transporting, and/or otherwise handling one or more input ingredients, intermediate ingredients, and/or processed products (e.g., hydrocarbons, gases, etc.). In this regard, for example, the individual physical streams of the plant 102 may include physical streams associated with a particular process performed by the plant 102.

The plant 102 in some embodiments includes any number of individual physical storage units. The physical storage units may perform a particular function during operation of the plant 102. For example, the physical storage units may include one or more input physical storage units, intermediate physical storage units, component physical storage units, processed product physical storage units, and/or the like that perform a particular operation for transforming, storing, releasing, transporting, and/or otherwise handling one or more input ingredients, intermediate ingredients, and/or processed products (e.g., hydrocarbons, gases, etc.). In this regard, for example, the individual physical streams of the plant 102 may include physical storage units associated with a particular process performed by the plant 102.

In some embodiments, each individual physical processing unit, each individual physical storage unit, and/or each individual physical stream of the plant 102 is associated with a determinable location. The determinable location of a particular physical processing unit, physical storage unit, and/or physical stream in some embodiments represents an absolute position (e.g., GPS coordinates, latitude, and longitude locations, and/or the like) or a relative position (e.g., a point representation of the location of a physical processing unit, physical storage unit, and/or physical stream from a local origin point corresponding to the plant 102). In some embodiments, a physical processing unit, physical storage unit, and/or physical stream includes or otherwise is associated with a location sensor and/or software-driven location services that provide the location data representing the location corresponding to that physical processing unit, physical storage unit, and/or physical stream. In other embodiments the location of a physical processing unit, physical storage unit, and/or physical stream is stored and/or otherwise predetermined within a software environment, provided by a user and/or otherwise determinable to one or more systems.

Additionally, or alternatively, in some embodiments, the plant 102 itself is associated with a determinable location. The determinable location of the plant 102 in some embodiments represents an absolute position (e.g., GPS coordinates, latitude and longitude locations, an address, and/or the like) or a relative position of the plant 102 (e.g., an identifier representing the location of the plant 102 as compared to one or more other plants, one or more other buildings, an enterprise headquarters, or general description in the world for example based at least in part on continent, state, or other definable region). In some embodiments, the plant 102 includes or otherwise is associated with a location sensor and/or software-driven location services that provide the location data corresponding to the plant 102. In other embodiments, the location of the plant 102 is stored and/or otherwise determinable to one or more systems.

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

In some embodiments, the environment 100 may include a master controller 140. In some embodiments, for example, the master controller 140 may be configured to optimize one or more plants (e.g., plant 102), such as by performing an optimization operation. In this regard, for example, the master controller 140 may be configured to optimize operations of the plant 102. The master controller 140 may be electronically and/or communicatively coupled to the plant 102, individual physical processing units of the plant 102, individual physical storage units of the plant 102, individual physical streams of the plant 102, one or more databases 150, a secondary controller 160, and/or one or more user devices 170. The master controller 140 may be located remotely, in proximity of, and/or within the plant 102. In some embodiments, the master controller 140 is configured via hardware, software, firmware, and/or a combination thereof, to perform data intake of one or more types of data associated with one or more of the plant 102, individual physical processing units of the plant 102, individual physical storage units of the plant 102, individual physical streams of the plant 102, one or more databases 150, the secondary controller 160, and/or one or more user devices 170. Additionally, or alternatively, in some embodiments, the master controller 140 is configured via hardware, software, firmware, and/or a combination thereof, to generate and/or transmit command(s) that control, adjust, or otherwise impact operations of plant 102, individual physical processing units of the plant 102, individual physical storage units of the plant 102, individual physical streams of the plant 102, one or more databases 150, the secondary controller 160, and/or one or more user devices 170, for example for controlling one or more operations of the plant 102. Additionally, or alternatively still, in some embodiments, the master controller 140 is configured via hardware, software, firmware, and/or a combination thereof, to perform data reporting and/or other data output process(es) associated with monitoring or otherwise analyzing operations of plant 102, individual physical processing units of the plant 102, individual physical storage units of the plant 102, individual physical streams of the plant 102, one or more databases 150, the secondary controller 160, and/or one or more user devices 170, for example for generating and/or outputting report(s) corresponding to the operations performed via the plant 102. For example, in various embodiments, the master controller 140 may be configured to execute and/or perform one or more operations and/or functions described herein.

In some embodiments, the environment 100 may include a secondary controller 160. In some embodiments, for example, the secondary controller 160 may be configured to optimize one or more plants (e.g., plant 102), such as by performing an optimization operation. In this regard, for example, the secondary controller 160 may be configured to optimize operations of an individual physical processing unit of the plant 102. The secondary controller 160 may be electronically and/or communicatively coupled to the plant 102, individual physical processing units of the plant 102, individual physical storage units of the plant 102, individual physical streams of the plant 102, one or more databases 150, the master controller 140, and/or one or more user devices 170. The secondary controller 160 may be located remotely, in proximity of, and/or within the plant 102. In some embodiments, the secondary controller 160 is configured via hardware, software, firmware, and/or a combination thereof, to perform data intake of one or more types of data associated with one or more of the plant 102, individual physical processing units of the plant 102, individual physical storage units of the plant 102, individual physical streams of the plant 102, one or more databases 150, the master controller 140, and/or one or more user devices 170. Additionally, or alternatively, in some embodiments, the secondary controller 160 is configured via hardware, software, firmware, and/or a combination thereof, to generate and/or transmit command(s) that control, adjust, or otherwise impact operations of plant 102, individual physical processing units of the plant 102, individual physical storage units of the plant 102, individual physical streams of the plant 102, one or more databases 150, the master controller 140, and/or one or more user devices 170, for example for controlling one or more operations of the plant 102. Additionally, or alternatively still, in some embodiments, the secondary controller 160 is configured via hardware, software, firmware, and/or a combination thereof, to perform data reporting and/or other data output process(es) associated with monitoring or otherwise analyzing operations of plant 102, individual physical processing units of the plant 102, individual physical storage units of the plant 102, individual physical streams of the plant 102, one or more databases 150, the master controller 140, and/or one or more user devices 170, for example for generating and/or outputting report(s) corresponding to the operations performed via the plant 102. For example, in various embodiments, the secondary controller 160 may be configured to execute and/or perform one or more operations and/or functions described herein.

In some embodiments, the master controller 140 and/or the secondary controller 160 is associated with one or more controlled variables (CVs). In some embodiments, a controlled variable (CV) is a variable and/or parameter that is controlled such that the controlled variable's value is at or near a setpoint and/or within a desired range. Said differently, for example, a controlled variable may be a variable and/or parameter that is the output of an optimization operation performed by the master controller 140 and/or the secondary controller 160. For example, a controlled variable may be a variable and/or parameter that is representative of an output of a hydrocracking physical processing unit (e.g., an output of a hydrocracker).

In some embodiments, the master controller 140 and/or the secondary controller 160 is associated with one or more manipulated variables (MVs). In some embodiments, a manipulated variable (MV) is a variable and/or parameter that is manipulated, moved, operated, and/or adjusted in order to alter the value of one or more controlled variables. Said differently, for example, a manipulated variable may be a variable and/or parameter that is the input of an optimization operation performed by the master controller 140 and/or the secondary controller 160. For example, a manipulated variable may be a variable and/or parameter that is representative of an input to a hydrocracking physical processing unit (e.g., a physical stream into a hydrocracker).

In some embodiments, one or more manipulated variables may be conjoint manipulated variables (e.g., a pair of conjoint manipulated variables). In some embodiments, a conjoint manipulated variable is a manipulated variable that is the same variable (e.g., the same manipulated variable) for both the master controller 140 and/or the secondary controller 160. For example, a conjoint manipulated variable may be a variable and/or parameter that is representative of an input to a hydrocracking physical processing unit.

In some embodiments, the master controller 140, the secondary controller 160, and/or one or more other secondary controllers may be configured to implement model predictive control (MPC) in order to optimize the plant 102, such as by performing an optimization operation. In this regard, in some embodiments, the master controller 140 is an independent controller using a reduced model. In order for the master controller 140 to cascade over the secondary controller 160 and/or one or more other secondary controllers, the master controller 140 honors the constraints of the secondary controller 160 and/or one or more other secondary controllers, or it may not be optimal or even feasible to implement optimization of the plant 102. To help avoid this situation, a proxy limit technique is used to merge multiscale models. In some embodiments, a proxy limit technique is a technique for representing the constraint(s) (e.g., limits of the constraints associated with manipulated variables and/or controlled variables) of the secondary controller 160 in a master controller manipulated variable space 400 associated with the master controller 140. Such proxy limit techniques and model predictive control are described in detail in U.S. Patent No. 10,379,503 and U.S. Patent No. 9,733,629 and, to supplement the present disclosure, this application incorporates entirely by reference U.S. Patent No. 10,379,503 and U.S. Patent No. 9,733,629.

The one or more databases 150 may be configured to receive, store, and/or transmit data. In some embodiments, the one or more databases 150 may be associated with data associated with the plant 102. In some embodiments, the data may be received from the plant 102. In this regard, for example, the plant 102 may have one or more sensors that capture data and/or one or more datastores that store data. In some embodiments, the data may be received from the master controller 140 and/or the secondary controller 160. In this regard, for example, the master controller 140 and/or the secondary controller 160 may be configured to identify data associated with the plant 102. In some embodiments, the one or more databases 150 may be associated with data received from the plant 102, the master controller 140, and/or the secondary controller 160 in real-time. Additionally, or alternatively, the one or more databases 150 may be associated with data received from the plant 102, the master controller 140, and/or the secondary controller 160 on a periodic basis (e.g., the data may be received from the plant 102, the master controller 140, and/or the secondary controller 160 once per day). Additionally, or alternatively, the one or more databases 150 may be associated with data received from the plant 102, the master controller 140, and/or the secondary controller 160 in response to a request for the data. Additionally, or alternatively, the one or more databases 150 may be associated with data inputted (e.g., by a user) into the master controller 140, the secondary controller 160, and/or the one or more user devices 170.

The one or more user devices 170 may be associated with users of the master controller 140. In various embodiments, the master controller 140 may generate and/or transmit a message, alert, or indication to a user via a user device 170. Additionally, or alternatively, a user device 170 may be utilized by a user to remotely access the master controller 140 and/or the secondary controller 160. This may be by, for example, an application operating on the user device 170. A user may access the master controller 140 remotely, including one or more visualizations, reports, and/or real-time displays.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the master controller 140 may include the one or more databases 150, which may collectively be located in or at the plant 102.

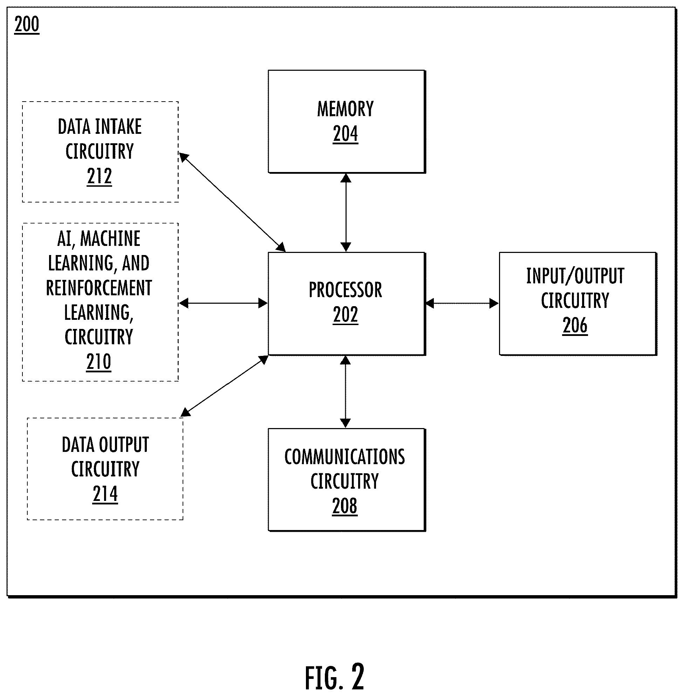

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, a master controller 140, the secondary controller 160, the one or more databases 150, and/or a user device 170. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the master controller 140, the secondary controller 160, and/or of the user device 170 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the plant 102. In some embodiments, the data intake circuitry 212 includes hardware, software, firmware, and/or a combination thereof, that communicates with one or more sensor(s) unit(s), and/or the like within the plant 102 to receive particular data associated with such operations of the plant 102. Additionally, or alternatively, in some embodiments, the data intake circuitry 212 includes hardware, software, firmware, and/or a combination thereof, that retrieves particular data associated with the plant 102 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

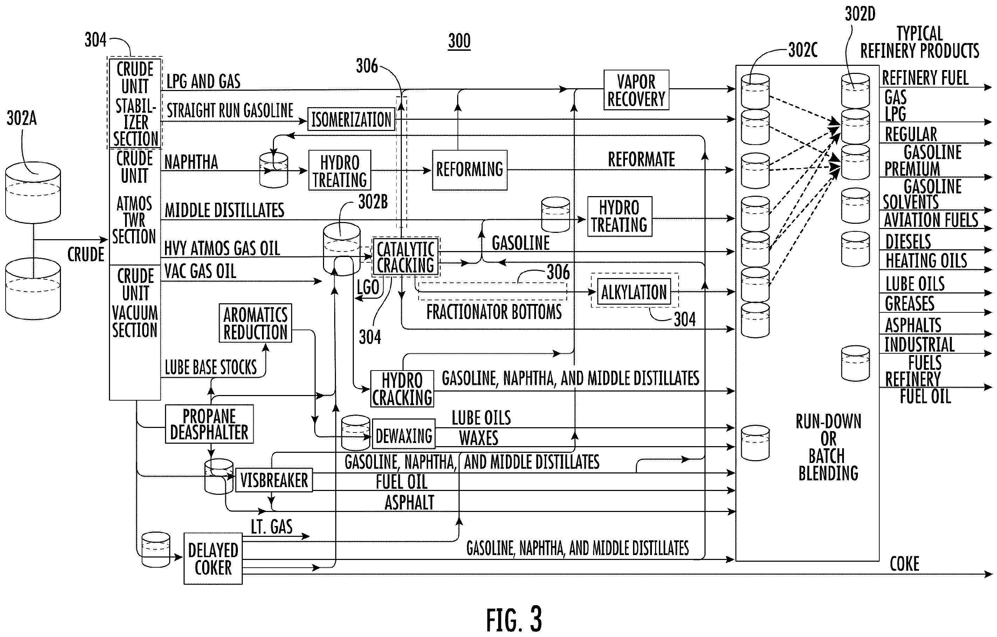

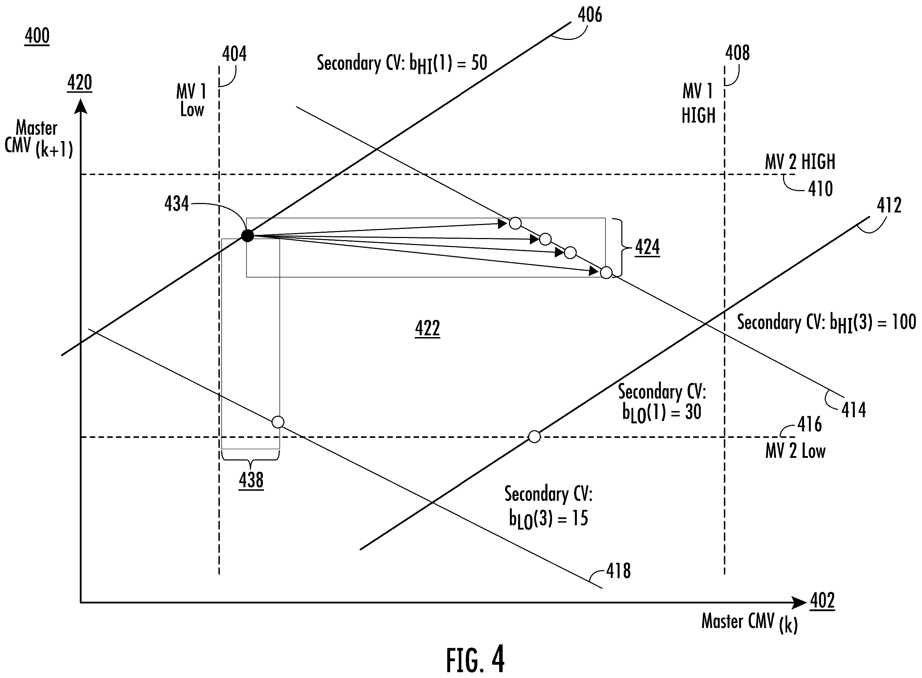

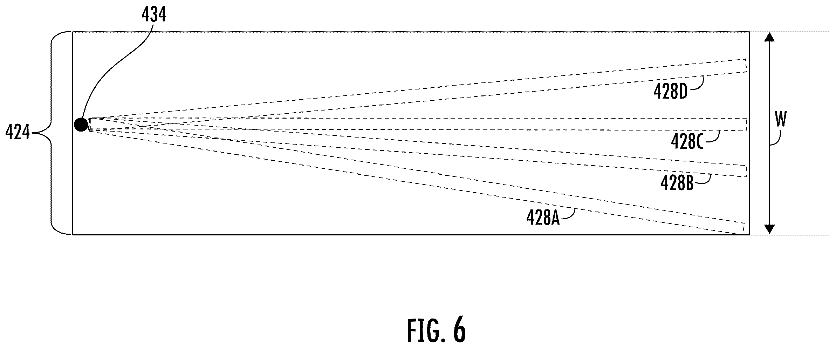

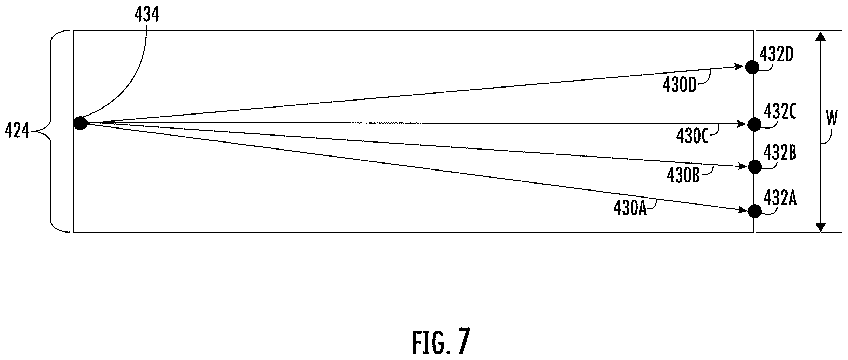

With reference to FIGS. 1-7, in some embodiments, the master controller 140 and/or the secondary controller 160 is configured to generate a flow sheet model 300. In some embodiments, the master controller 140 and/or the secondary controller 160 is configured generate the flow sheet model 300 using operational data. In some embodiments, operational data includes one or more items of data representative and/or indicative of operations of the plant 102. For example, operational data may be representative of any number of physical processing units, physical storage units, and/or physical streams included in the plant 102 (e.g., which physical processing units, physical storage units, and/or physical streams are included in the plant 102). As another example, operational data may be representative of one or more statuses associated with the plant 102 (e.g., what type of processed product the plant 102 is generating). In this regard, in some embodiments, the master controller 140 and/or the secondary controller 160 is configured to receive operational data from the plant 102 and use the operational data to generate the flow sheet model 300. Additionally, or alternatively, the master controller 140 and/or the secondary controller 160 is configured to receive the flow sheet model 300. For example, the master controller 140 and/or the secondary controller 160 may be configured to receive the flow sheet model 300 from the plant 102 and/or one or more external computing devices (e.g., the plant 102 and/or one or more external computing devices are configured to generate the flow sheet model 300).

In some embodiments, the flow sheet model 300 is representative of a layout of the plant 102. In this regard, in some embodiments, the flow sheet model 300 is representative of a plurality of physical storage units 302 of the plant 102. In some embodiments, each of the plurality of physical storage units 302 is configured to store one or more processing materials. In some embodiments, the one or more processing materials include one or more input ingredients. For example, the one or more input ingredients may include raw materials and/or ingredients upon which the plant 102 has not performed any processing (e.g., crude oil). In some embodiments, the one or more processing materials include one or more intermediate ingredients. For example, the one or more intermediate ingredients may include partially processed materials and/or partially processed ingredients upon which the plant 102 has performed some processing but has not completed processing. In some embodiments, the one or more processing materials include one or more processed products. For example, the one or more processed products may include processed materials and/or processed products upon which the plant 102 has completed processing (e.g., aviation fuel).

In some embodiments, the plurality of physical storage units 302 includes any number of the types of physical storage units described above. For example, the plurality of physical storage units 302 may include one or more input physical storage units 302A. In some embodiments, the one or more input physical storage units 302A are configured to store processing materials that include one or more input ingredients. As another example, the plurality of physical storage units 302 may include one or more intermediate physical storage units 302B. In some embodiments, the one or more intermediate physical storage units 302B are configured to store processing materials that include one or more intermediate ingredients. As another example, the plurality of physical storage units 302 may include one or more component physical storage units 302C. In some embodiments, the one or more component physical storage units 302C are configured to store processing materials that include one or more intermediate ingredients. As another example, the plurality of physical storage units 302 may include one or more processed product physical storage units 302D. In some embodiments, the one or more processed product physical storage units 302D are configured to store processing materials that include one or more processed products.

In some embodiments, the flow sheet model 300 is representative of a plurality of physical processing units 304 of the plant 102. In some embodiments, the plurality of physical processing units 304 include any number of the types of physical processing units described above. For example, the plurality of physical storage units 302 may include a catalytic cracking processing unit. In some embodiments, the flow sheet model 300 is representative of a plurality of physical streams 306 of the plant 102. In some embodiments, the plurality of physical streams 306 include any number of the types of physical streams described above. For example, the plurality of physical streams 306 may include a naphtha physical stream. Additionally, or alternatively, the flow sheet model 300 is representative of one or more relationships and/or connections between the plurality of physical storage units 302, the plurality of physical processing units 304, and/or the plurality of physical streams 306. For example, the flow sheet model 300 may indicate that one or more of the plurality of physical storage units 302 are connected to one or more of the plurality of physical processing units 304 via one or more of the plurality of physical streams 306.

In some embodiments, the master controller 140 and/or the secondary controller 160 is configured to generate the master controller manipulated variable space 400. For example, the master controller 140 and/or the secondary controller 160 may configured to generate the master controller manipulated variable space 400 using a proxy limit technique. In some embodiments, the master controller manipulated variable space 400 is a space for representing constraint(s) (e.g., the constraints associated with manipulated variables and/or controlled variables) of the secondary controller 160 in relation to the master controller 140.

In some embodiments, the master controller manipulated variable space 400 corresponds to a set of master controller manipulated variables. In some embodiments, the set of master controller manipulated variables comprises a first master controller manipulated variable and/or a second master controller manipulated variable. In this regard, in some embodiments, a first axis 402 (e.g., Master CMV₍ₖ₎) of the master controller manipulated variable space 400 corresponds to the first master controller manipulated variable. In some embodiments, a second axis 420 (e.g., Master CMV₍ₖ₊₁₎) of the master controller manipulated variable space 400 corresponds to the second master controller manipulated variable.

In some embodiments, the master controller manipulated variable space 400 corresponds to a set of secondary controller manipulated variables. For example, the set of secondary controller manipulated variables may comprise a first secondary controller manipulated variable and/or a second secondary controller manipulated variable.

In some embodiments, the first secondary controller manipulated variable may have a low limit 404 (e.g., MV1 Low). In some embodiments, the low limit 404 may be a limit that the secondary controller 160 is unable to go below for the first secondary controller manipulated variable. For example, the low limit 404 may be a limit of a first physical stream (e.g., lowest possible flow rate of the first physical stream) that the secondary controller 160 is unable to go below. In some embodiments, the first secondary controller manipulated variable may have a high limit 408 (e.g., MV1 High). In some embodiments, the high limit 408 may be a limit that the secondary controller 160 is unable to go above for the first secondary controller manipulated variable. For example, the high limit 408 may be a limit of a first physical stream (e.g., highest possible flow rate of the first physical stream) that the secondary controller 160 is unable to go above.

In some embodiments, the second secondary controller manipulated variable may have a low limit 416 (e.g., MV2 Low). In some embodiments, the low limit 416 may be a limit that the secondary controller 160 is unable to go below for the second secondary controller manipulated variable. For example, the low limit 416 may be a limit of a second physical stream (e.g., lowest possible flow rate of the second physical stream) that the secondary controller 160 is unable to go below. In some embodiments, the second secondary controller manipulated variable may have a high limit 410 (e.g., MV2 High). In some embodiments, the high limit 410 may be a limit that the secondary controller 160 is unable to go above for the second secondary controller manipulated variable. For example, the high limit 410 may be a limit of a second physical stream (e.g., highest possible flow rate of the second physical stream) that the secondary controller 160 is unable to go above.

In some embodiments, the set of master controller manipulated variables and the set of secondary controller manipulated variables may be conjoint manipulated variables. For example, the first master controller manipulated variable and the first secondary controller manipulated variable may be conjoint variables (e.g., Conj Vars). As another example, the second master controller manipulated variable and the second secondary controller manipulated variable may be conjoint variables.

In some embodiments, the master controller manipulated variable space 400 corresponds to a set of secondary controller controlled variables. For example, the set of secondary controller controlled variables may comprise a first secondary controller controlled variable and/or a second secondary controller controlled variable.

In some embodiments, the first secondary controller controlled variable may have a low limit 412 (e.g., Secondary CV: b_{LO}(1) = 30). In some embodiments, the low limit 412 may be a limit that the secondary controller 160 is unable to go below for the first secondary controller controlled variable. For example, the low limit 412 may be a limit of a first physical processing unit (e.g., lowest possible output of the first physical processing unit) that the secondary controller 160 is unable to go below. In some embodiments, the first secondary controller controlled variable may have a high limit 406 (e.g., Secondary CV: b_{HI}(1) = 50). In some embodiments, the high limit 406 may be a limit that the secondary controller 160 is unable to go above for the first secondary controller controlled variable. For example, the high limit 406 may be a limit of a first physical processing unit (e.g., highest possible output of the first physical processing unit) that the secondary controller 160 is unable to go above.

In some embodiments, the second secondary controller controlled variable may have a low limit 418 (e.g., Secondary CV: b_{LO}(3) = 15). In some embodiments, the low limit 418 may be a limit that the secondary controller 160 is unable to go below for the second secondary controller controlled variable. For example, the low limit 418 may be a limit of a second physical processing unit (e.g., lowest possible output of the second physical processing unit) that the secondary controller 160 is unable to go below. In some embodiments, the second secondary controller controlled variable may have a high limit 414 (e.g., Secondary CV: b_{HI}(3) = 100). In some embodiments, the high limit 414 may be a limit that the secondary controller 160 is unable to go above for the second secondary controller controlled variable. For example, the high limit 414 may be a limit of a second physical processing unit (e.g., highest possible output of the second physical processing unit) that the secondary controller 160 is unable to go above.

In some embodiments, the master controller 140 and/or the secondary controller 160 is associated with an operating point 434. In some embodiments, the operating point 434 is the current operating point of one or more manipulated variables associated with the master controller 140 and/or the secondary controller 160. For example, the operating point 434 may be the current operating point of one or more of the first master controller manipulated variable, the first secondary controller manipulated variable, the second master controller manipulated variable, and/or the second secondary controller manipulated variable (e.g., a current flow rate in a physical stream of the plant 102). Said differently, for example, the operating point 434 may be a current operating point of one or more conjoint manipulated variables of the master controller 140 and/or the secondary controller 160. In some embodiments, the operating point 434 is represented in the master controller manipulated variable space 400 as a set of coordinates, such as (0,0).

In some embodiments, the operating point 434 is within a feasible operating region 422 (e.g., anywhere within the feasible operating region 422). In some embodiments, the feasible operating region 422 is a region in which the one or more manipulated variables associated with the master controller 140 and/or the secondary controller 160 may be able to be manipulated, moved, operated, adjusted, and/or the like while ensuring that the master controller 140 can adhere to the constraints of the secondary controller 160 (e.g., the constraints associated with manipulated variables and/or controlled variables of the secondary controller 160). For example, the one or more manipulated variables may be operated, adjusted, moved, and/or the like within the feasible operating region 422 in order to optimize the plant 102, individual physical processing units of the plant 102, individual physical storage units of the plant 102, individual physical streams of the plant 102. In this regard, in some embodiments, the feasible operating region 422 may be defined at least in part by one or more of the low limit 404, the low limit 416, the low limit 412, the low limit 418, the high limit 408, the high limit 410, the high limit 406, and/or the high limit 414. Said differently, for example, the feasible operating region 422 defines the possible combinations of values that could be selected by the master controller 140 while satisfying all constraints of the secondary controller 160.

In some embodiments, one or more of the low limit 404, the high limit 408, the low limit 416, the high limit 410, the low limit 412, the high limit 406, the low limit 418, and/or the high limit 414 comprise one or more limit positions. For example, one or more of the low limit 404, the high limit 408, the low limit 416, the high limit 410, the low limit 412, the high limit 406, the low limit 418, and/or the high limit 414 comprise one or more of a set of limit positions (e.g., a first limit position 432A, a second limit position 432B, a third limit position 432C, and/or a fourth limit position 432D), an additional set of limit positions, and/or other limit positions. In some embodiments, a limit position is a particular position on one or more of the low limit 404, the high limit 408, the low limit 416, the high limit 410, the low limit 412, the high limit 406, the low limit 418, and/or the high limit 414. In some embodiments, a limit position may represent a limit or maximum amount one or more manipulated variables associated with the secondary controller 160 and/or the master controller 140 may be manipulated, moved, operated, adjusted, and/or the like while still staying within the constraint(s) of the secondary controller. In this regard, in some embodiments, at least one of a set of limit positions is defined by one or more of the set of secondary controller manipulated variables associated with the secondary controller 160. In some embodiments, a limit position may be referred to as a proxy limit value.

In some embodiments, the master controller 140 and/or the secondary controller 160 is configured to determine a first optimization request bandwidth 424 for the feasible operating region 422 associated with the secondary controller 160. In some embodiments, the first optimization request bandwidth 424 corresponds to a first movement direction. In some embodiments, the first movement direction is from the operating point 434 of the set of secondary controller manipulated variables towards at least a first limit associated with at least one secondary controller manipulated variable of the set of secondary controller manipulated variables. In some embodiments, the first limit may correspond to the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable. In this regard, in some embodiments, the first optimization request bandwidth 424 corresponds to a first movement direction from the operating point 434 of the set of secondary controller manipulated variables towards one or more of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable.

In some embodiments, the first optimization request bandwidth 424 comprises one or more subsidiary movement directions. For example, the first optimization request bandwidth 424 may comprise a first subsidiary movement direction 428A, a second subsidiary movement direction 428B, a third subsidiary movement direction 428C, and/or a fourth subsidiary movement direction 428D.

In some embodiments, the one or more subsidiary movement directions are within the first optimization request bandwidth 424. In some embodiments, one or more of the one or more subsidiary movement directions may correspond to one or more limit positions, such as a set of limit positions. Said differently, in some embodiments, the first movement direction may be from the operating point 434 towards an area or section of one or more of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable and the one or more subsidiary movement directions may be from the operating point 434 towards particular positions (e.g., limit positions) within the area associated with the first movement direction.

In some embodiments, determining the first optimization request bandwidth 424 comprises the master controller 140 and/or the secondary controller 160 being configured to determine a high limit for at least one secondary controller manipulated variable of the set of secondary controller manipulated variables. In this regard, in some embodiments, determining the first optimization request bandwidth 424 comprises the master controller 140 and/or the secondary controller 160 being configured to determine one of the high limit 408 of the first secondary controller manipulated variable or the high limit 410 of the second secondary controller manipulated variable. Said differently, for example, the master controller 140 and/or the secondary controller 160 may determine a value of the high limit 408 of the first secondary controller manipulated variable or the high limit 410 of the second secondary controller manipulated variable (e.g., a value representing a flow rate of 26 of a physical stream of the plant 102).

In some embodiments, determining the first optimization request bandwidth 424 comprises the master controller 140 and/or the secondary controller 160 being configured to determine a low limit for at least one secondary controller manipulated variable of the set of secondary controller manipulated variables. In this regard, in some embodiments, determining the first optimization request bandwidth 424 comprises the master controller 140 and/or the secondary controller 160 being configured to determine one of the low limit 404 of the first secondary controller manipulated variable or the low limit 416 of the second secondary controller manipulated variable. Said differently, for example, the master controller 140 and/or the secondary controller 160 may determine a value of the low limit 404 of the first secondary controller manipulated variable or the low limit 416 of the second secondary controller manipulated variable (e.g., a value representing a flow rate of 12 of a physical stream of the plant 102).

In some embodiments, the master controller 140 and/or the secondary controller 160 is configured to use the high limit for at least one secondary controller manipulated variable of the set of secondary controller manipulated variables and the low limit for at least one secondary controller manipulated variable of the set of secondary controller manipulated variables to determine the first optimization request bandwidth 424. For example, the master controller 140 and/or the secondary controller 160 may determine the first optimization request bandwidth 424 as a percentage (e.g., 10%) of a movement distance between the high limit for at least one secondary controller manipulated variable of the set of secondary controller manipulated variables and the low limit for at least one secondary controller manipulated variable of the set of secondary controller manipulated variables.

In some embodiments, a movement distance is representative and/or indicative of a distance between two locations within the master controller manipulated variable space 400. For example, a movement distance may be representative and/or indicative of a distance between the operating point 434 and/or one or more of the low limit 404, low limit 416, the low limit 412, low limit 418, the high limit 408, the high limit 410, the high limit 406, and/or the high limit 414. As another example, a movement distance may be representative and/or indicative of a distance between the operating point 434 and an optimal operating point 436.

In some embodiments, the optimal operating point 436 is the optimal and/or ideal operating point of one or more manipulated variables associated with the master controller 140 and/or the secondary controller 160. For example, the optimal operating point 436 may be the optimal and/or ideal operating point of one or more of the first master controller manipulated variable, the first secondary controller manipulated variable, the second master controller manipulated variable, and/or the second secondary controller manipulated variable (e.g., a current flow rate in a physical stream of the plant 102). Said differently, for example, the optimal operating point 436 may be an optimal and/or ideal operating point of one or more conjoint manipulated variables of the master controller 140 and/or the secondary controller 160 in order to optimize the plant 102, individual physical processing units of the plant 102, individual physical storage units of the plant 102, and/or individual physical streams of the plant 102. In some embodiments, the optimal operating point 436 is represented in master controller manipulated variable space 400 as a set of coordinates, such as (2,2).

In some embodiments, determining the first optimization request bandwidth 424 comprises the master controller 140 and/or the secondary controller 160 being configured to determine a movement distance to at least one limit associated with at least one of the set of secondary controller manipulated variables from the operating point 434 of the set of secondary controller manipulated variables. In some embodiments, the at least one limit comprises at least one of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable. In this regard, for example, determining the first optimization request bandwidth 424 comprises determining a movement distance to at least one of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable from the operating point 434.

In some embodiments, the master controller 140 and/or the secondary controller 160 is configured to use the at least one limit for at least one secondary controller manipulated variable of the set of secondary controller manipulated variables to determine the first optimization request bandwidth 424. For example, the master controller 140 and/or the secondary controller 160 may determine the first optimization request bandwidth 424 as a percentage (e.g., 20%) of a movement distance to at least one limit associated with at least one of the set of secondary controller manipulated variables from the operating point 434 of the set of secondary controller manipulated variables.

In some embodiments, the master controller 140 and/or the secondary controller 160 is configured to determine a second optimization request bandwidth 438 for the feasible operating region 422 associated with the secondary controller 160. In some embodiments, the second optimization request bandwidth 438 corresponds to a second movement direction. In some embodiments, the second movement direction is from the operating point 434 of the set of secondary controller manipulated variables towards at least a second limit associated with at least one secondary controller manipulated variable of the set of secondary controller manipulated variables or at least one other secondary controller manipulated variable of the set of secondary controller manipulated variables. In some embodiments, the second limit may correspond to the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable. In this regard, in some embodiments, the second optimization request bandwidth 438 corresponds to a second movement direction from the operating point 434 of the set of secondary controller manipulated variables towards one or more of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable. In some embodiments, the second movement direction is different than the first movement direction. In this regard, in some embodiments, the second limit is different than the first limit. Said differently, for example, the second limit may correspond to one of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable that does not correspond to the first limit.

In some embodiments, the second optimization request bandwidth 438 comprises one or more additional subsidiary movement directions. For example, the second optimization request bandwidth 438 may comprise a first additional subsidiary movement direction, a second additional subsidiary movement direction, a third additional subsidiary movement direction, and/or a fourth additional subsidiary movement direction.

In some embodiments, the one or more additional subsidiary movement directions are within the second optimization request bandwidth 438. In some embodiments, one or more of the one or more additional subsidiary movement directions may correspond to one or more additional limit positions, such as an additional set of limit positions. Said differently, in some embodiments, the second movement direction may be from the operating point 434 towards an area or section of one or more of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable and the one or more additional subsidiary movement directions may be from the operating point 434 towards particular positions (e.g., limit positions) within the area associated with the second movement direction.

In some embodiments, the master controller 140 and/or the secondary controller 160 is configured to determine one or more additional optimization request bandwidths in addition the first optimization request bandwidth 424 and/or the second optimization request bandwidth 438. For example, the master controller 140 and/or the secondary controller 160 is configured to determine four optimization request bandwidths or eight optimization request bandwidths in total. In some embodiments, the second optimization request bandwidth 438 and/or one or more additional optimization request bandwidths may be determined in a similar manner as described with respect to the first optimization request bandwidth 424.

In some embodiments, the master controller 140 is configured to generate a first optimization request. In some embodiments, the first optimization request is for the first optimization request bandwidth 424. In some embodiments, the first optimization request comprises one or more items of data representative and/or indicative of a set of optimization inquiries. In some embodiments, the set of optimization inquiries comprises one or more optimization inquiries. For example, the set of optimization inquires may comprise a first optimization inquiry 430A, a second optimization inquiry 430B, a third optimization inquiry 430C, and/or a fourth optimization inquiry 430D.

In some embodiments, one or more of the set of optimization inquiries correspond to one or more subsidiary movement directions in the first optimization request bandwidth 424. For example, the first optimization inquiry 430A may correspond to the first subsidiary movement direction 428A, the second optimization inquiry 430B may correspond to the second subsidiary movement direction 428B, the third optimization inquiry 430C may correspond to the third subsidiary movement direction 428C, and/or the fourth optimization inquiry 430D may correspond to the fourth subsidiary movement direction 428D. In some embodiments, an optimization inquiry comprises a call, transmission, and/or inquiry to the secondary controller 160 to identify at least one limit position that corresponds to a subsidiary movement direction within the first optimization request bandwidth 424.

In some embodiments, the master controller 140 is configured to generate a second optimization request. In some embodiments, the second optimization request is for the second optimization request bandwidth 438. In some embodiments, the second optimization request comprises one or more items of data representative and/or indicative of an additional set of optimization inquiries. In some embodiments, the additional set of optimization inquiries comprises one or more additional optimization inquiries. For example, the additional set of optimization inquires may comprise a first additional optimization inquiry, a second additional optimization inquiry, a third additional optimization inquiry, and/or a fourth additional optimization inquiry.

In some embodiments, one or more of the additional set of optimization inquiries correspond to one or more additional subsidiary movement directions in the second optimization request bandwidth 438. For example, the first additional optimization inquiry may correspond to the first additional subsidiary movement direction, the second additional optimization inquiry may correspond to the second additional subsidiary movement direction, the third additional optimization inquiry may correspond to the third additional subsidiary movement direction, and/or the fourth additional optimization inquiry may correspond to the fourth additional subsidiary movement direction. In some embodiments, an additional optimization inquiry comprises a call, transmission, and/or inquiry to the secondary controller 160 to identify at least one limit position that corresponds to an additional subsidiary movement direction within the first optimization request bandwidth 424.

In some embodiments, the master controller 140 is configured to generate one or more other optimization requests in a similar manner as described with respect to the first optimization request and/or the second optimization request. In some embodiments, the master controller 140 is configured to generate an optimization request for each of the optimization request bandwidths determined by the master controller 140 and/or the secondary controller 160. For example, if the master controller 140 and/or the secondary controller 160 determines four optimization request bandwidths, the master controller 140 may be configured to generate four optimization requests and/or if the master controller 140 and/or the secondary controller 160 determines eight optimization request bandwidths, the master controller 140 may be configured to generate eight optimization requests.

In some embodiments, the first optimization request, the second optimization request, and/or one or more other optimization requests may be implemented using the below linear programming (LP) optimization: 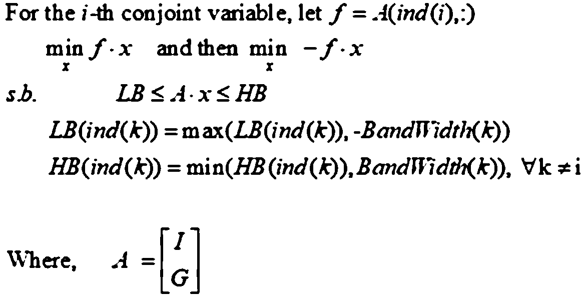 *ind(i)* is the row index in *A* that corresponds to the i-th conjoint var.

The parameters used in the above LP optimization for computing proxy limits (e.g., limits) within a user-defined search band (e.g., bandwidth) are summarized as follows:

| Inquiry Call | Conj Var # | f = | Band Bounds |
|---|---|---|---|
| 1 | i = 1 | A(ind(i), :) | LB(ind(k))=-BandWidth(k) |
| 2 | | -A(ind(i), :) | HB(ind(k))=BandWidth(k) for k ≠ i |
| 3 | i = 2 | A(ind(i), :) | LB(ind(k))=-BandWidth(k) |
| 4 | | -A(ind(i), :) | HB(ind(k))=BandWidth(k) for k ≠ i |
| ... | ... | ... | ... |
| 2n-1 | i = n | A(ind(i), :) | LB(ind(k))=-BandWidth(k) |
| 2n | | -A(ind(i), :) | HB(ind(k))=BandWidth(k) for k ≠ i |

In some embodiments, the master controller 140 is configured to transmit the first optimization request to the secondary controller 160. For example, the master controller 140 may be configured to transmit the first optimization request to the secondary controller 160 in response to the master controller 140 generating the first optimization request. As another example, the master controller may be configured to transmit the first optimization request to secondary controller. In some embodiments, the secondary controller 160 is configured to receive the first optimization request from the master controller 140.

In some embodiments, the master controller 140 is configured to transmit the second optimization request and/or one or more other optimization requests to the secondary controller. For example, the master controller 140 may be configured to transmit the second optimization request and/or one or more other optimization requests sequentially after transmitting the first optimization request to the secondary controller 160. As another example, the master controller 140 may be configured to transmit the second optimization request and/or one or more other optimization requests at the same time as transmitting the first optimization request to the secondary controller 160.

In some embodiments, the master controller 140 is configured to receive one or more limit positions of a set of limit positions from the secondary controller 160. In some embodiments, the master controller 140 is configured to receive one or more limit positions of a set of limit positions from the secondary controller 160 in response to transmitting the first optimization request to the secondary controller 160. For example, the master controller 140 is configured to receive the first limit position 432A of a set of limit positions from the secondary controller 160. In this regard, in some embodiments, the secondary controller 160 is configured to determine one or more limit positions in response to receiving the first optimization request. For example, the secondary controller 160 may be configured to solve one or more computing problems (e.g., an optimization problem) in order to determine one or more limit positions.

In some embodiments, the master controller 140 is configured to receive one or more additional limit positions of an additional set of limit positions from the secondary controller 160. In some embodiments, the master controller 140 is configured to receive one or more additional limit positions of an additional set of limit positions from the secondary controller 160 in response to transmitting the second optimization request to the secondary controller 160. For example, the master controller 140 is configured to receive a first additional limit position of a set of limit positions from the secondary controller 160. Said differently, for example, for each optimization request the master controller 140 transmits to the secondary controller 160, the master controller 140 may receive one or more limit positions in response.

In some embodiments, the master controller 140 and/or the secondary controller 160 is configured to determine an estimated feasible operating region 426 based one or more limit positions, such as one or more limit positions received from and/or determined by the secondary controller 160. For example, the master controller 140 and/or the secondary controller 160 may be configured to determine the estimated feasible operating region 426 based on the first limit position corresponding to the first optimization request, the first additional limit position corresponding to the second optimization request, and/or one or more other limit positions corresponding to one or more other optimization requests.

In some embodiments, the estimated feasible operating region 426 is an estimation or approximation of the feasible operating region 422. In this regard, in some embodiments, using one or more limit positions received from and/or determined by the secondary controller 160, the master controller 140 and/or the secondary controller 160 is able to determine limits and/or boundaries of operation of the secondary controller 160 that are imposed by constraints associated with the secondary controller 160. For example, using one or more limit positions received from and/or determined by the secondary controller 160, the master controller 140 and/or the secondary controller 160 is able to determine limits and/or boundaries of operation of the secondary controller 160 that are imposed by the low limit 404, low limit 416, the low limit 412, low limit 418, the high limit 408, the high limit 410, the high limit 406, and/or the high limit 414. In some embodiments, based on these determined limits and/or boundaries of operation of the secondary controller 160, the master controller 140 and/or the secondary controller 160 is configured to determine the estimated feasible operating region 426 (e.g., by approximating and/or estimating the feasible operating region 422).

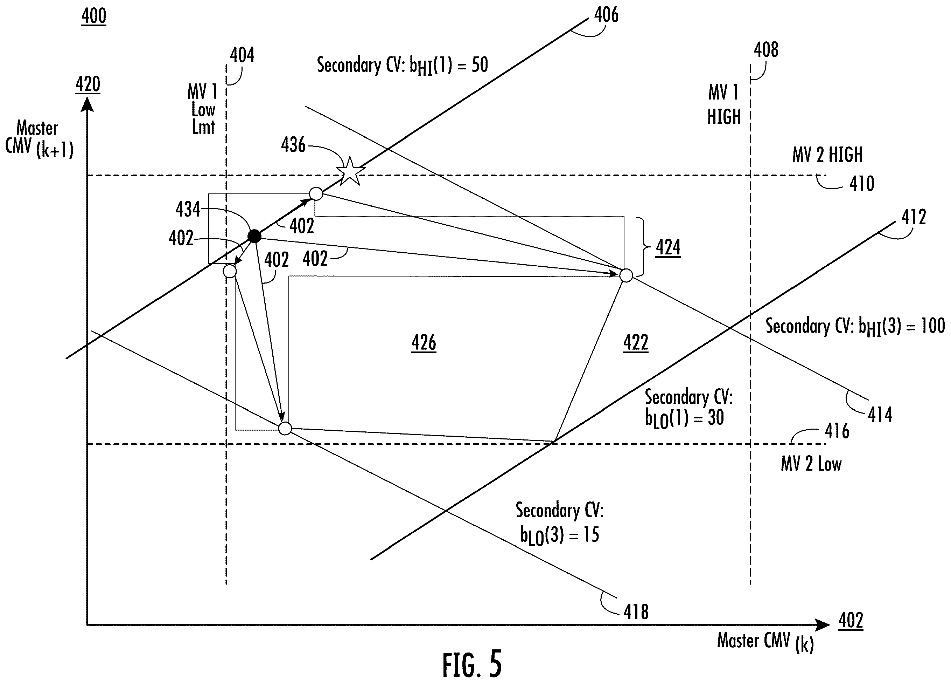

In some embodiments, the estimated feasible operating region 426 is associated with an area. In some embodiments, the area of the estimated feasible operating region 426 may be different than a second area of the feasible operating region 422 (e.g., since the estimated feasible operating region 426 may be an estimate and/or approximation of the feasible operating region 422). For example, the second area of the feasible operating region 422 may be greater than the area of the estimated feasible operating region 426, such as illustrated in FIG. 5. In some embodiments, increasing a width (W) of the first optimization request bandwidth 424 increases the area of the estimated feasible operating region 426. In this regard, in some embodiments, by increasing the width (W) of the first optimization request bandwidth 424, the set of limit positions received from the secondary controller 160 may provide a more accurate representation of one or more limits, such as the first limit. In some embodiments, increasing the area of the estimated feasible operating region 426, causes a difference between the second area of the feasible operating region 422 and the area of the estimated feasible operating region 426 to decrease. Said differently, for example, increasing the area of the estimated feasible operating region 426 causes the estimated feasible operating region 426 to be a more accurate representation of the feasible operating region 422.

In some embodiments, when the first optimization request bandwidth meets or is below a first width threshold, the first optimization request corresponds to a pinched optimization request. In some embodiments, a pinched optimization request is an optimization request that uses a pinched approach for determining one or more limit positions associated with the secondary controller 160. In some embodiments, when the first optimization request bandwidth meets or exceeds a second width threshold, the first optimization request corresponds to a full optimization request. In some embodiments, a full optimization request is an optimization request that uses a full approach for determining one or more limit positions associated with the secondary controller 160.

In some embodiments, the master controller 140 and/or the secondary controller 160 is configured to enable performance of one or more plant optimization actions. In some embodiments, the master controller 140 and/or the secondary controller 160 is configured to enable performance of one or more plant optimization actions based on the estimated feasible operating region 426. In this regard, in some embodiments, the master controller 140 and/or the secondary controller 160 is configured to enable performance of one or more plant optimization actions in order to optimize the plant 102, individual physical processing units of the plant 102, individual physical storage units of the plant 102, individual physical streams of the plant 102 while managing to respect the constraints of the secondary controller 160, such as by ensuring any plant optimization actions do not cause the operating point 434 to be adjusted such that the operating point 434 is outside of the feasible operating region 422. In some embodiments, enabling the master controller to perform the one or more plant optimization actions causes a reduction in a movement distance between the operating point 434 and the optimal operating point 436. In this regard, for example, enabling performance of one or more plant optimization actions may optimize operation of the plant 102 (e.g., by moving the operating point 434 closer to the optimal operating point 436) while ensuring that various constraints of the secondary controller 160 are not violated.

In some embodiments, enabling performance of one or more plant optimization actions comprises the master controller 140 and/or the secondary controller 160 being configured to generate one or more adjustment features for one or more master controller manipulated variables of the set of master controller manipulated variables. For example, enabling performance of one or more plant optimization actions may comprise the master controller 140 and/or the secondary controller 160 being configured to generate an adjustment feature for a first master controller manipulated variable of the set of master controller manipulated variables associated with the master controller 140. In some embodiments, an adjustment feature comprises one or more items of data representative and/or indicative of an amount that a master controller manipulated variable should be adjusted in order to optimize plant 102, individual physical processing units of the plant 102, individual physical storage units of the plant 102, individual physical streams of the plant 102 while managing to respect the constraints of the secondary controller 160. For example, an adjustment feature may comprise one or more items of data representative and/or indicative of an amount that a master controller manipulated variable should be adjusted in order to cause the movement distance between the operating point 434 and the optimal operating point 436 to be reduced.

In some embodiments, enabling performance of one or more plant optimization actions comprises the master controller 140 and/or the secondary controller 160 being configured to actuate a physical processing unit of the plant 102 (e.g., by causing the physical processing unit of the plant 102 to operate, such as by transmitting a signal to the physical processing unit of the plant 102 and/or a computing device associated with the physical processing unit). For example, enabling performance of one or more plant optimization actions may comprise the master controller 140 and/or the secondary controller 160 being configured to actuate a hydrocracking physical processing unit of the plant 102, such as to increase an output of the hydrocracking physical processing unit of the plant 102. Additionally, or alternatively, enabling performance of one or more plant optimization actions comprises the master controller 140 and/or the secondary controller 160 being configured to actuate a physical stream of the plant 102 (e.g., by causing the physical stream of the plant 102 to operate, such as by transmitting a signal to the physical stream of the plant 102 and/or a computing device associated with the physical stream). For example, enabling performance of one or more plant optimization actions may comprise the master controller 140 and/or the secondary controller 160 being configured to actuate an input feed into a hydrocracking physical processing unit of the plant 102, such as to increase input feed into the hydrocracking physical processing unit of the plant 102. In this regard, in some embodiments, actuating at least one of physical processing unit of the plant or physical stream of the plant causes a flow rate in at least one physical stream of the plant to increase or decrease (e.g., an increase and/or decrease in the flow rate of a feed). In some embodiments, actuating a physical processing unit of the plant 102 and/or a physical stream of the plant 102 causes the movement distance between the operating point 434 and the optimal operating point 436 to be reduced.

### Example Methods

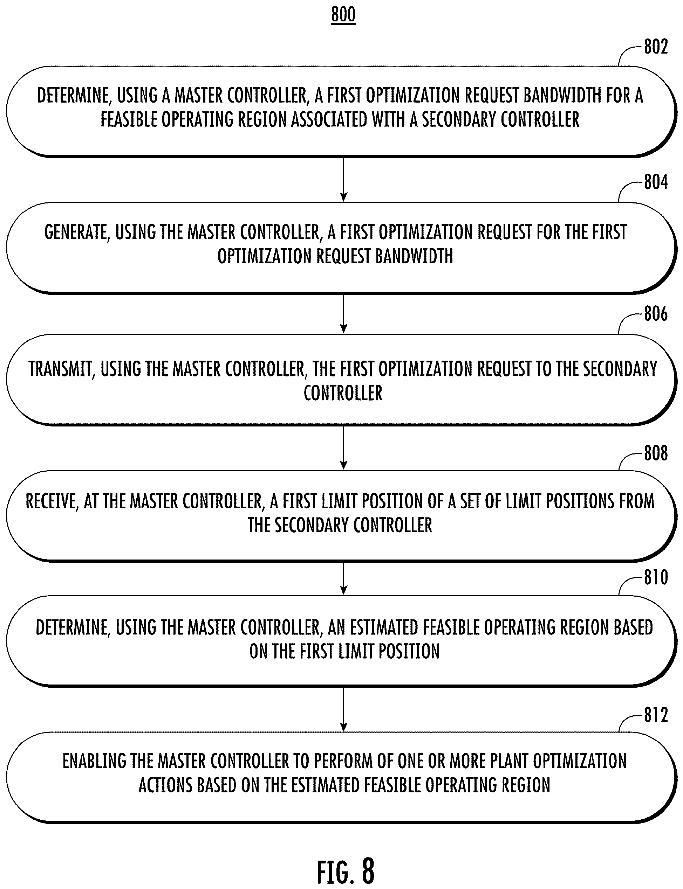

Referring now to FIG. 8, a flowchart providing an example method 800 is illustrated. In this regard, FIG. 8 illustrates operations that may be performed by the master controller 140, the secondary controller 160, the user device 170, the plant 102, and/or the like. In some embodiments, the method 800 includes operations for determining an estimated feasible operating region. In some embodiments, the example method 800 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 800.

As shown in block 802, the method 800 may comprise determining, using a master controller, a first optimization request bandwidth for a feasible operating region associated with a secondary controller. As described above, in some embodiments, the first optimization request bandwidth 424 corresponds to a first movement direction. In some embodiments, the first movement direction is from the operating point 434 of the set of secondary controller manipulated variables towards at least a first limit associated with at least one secondary controller manipulated variable of the set of secondary controller manipulated variables. In some embodiments, the first limit may correspond to the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable. In this regard, in some embodiments, the first optimization request bandwidth 424 corresponds to a first movement direction from the operating point 434 of the set of secondary controller manipulated variables towards one or more of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable.

In some embodiments, the first optimization request bandwidth 424 comprises one or more subsidiary movement directions. For example, the first optimization request bandwidth 424 may comprise a first subsidiary movement direction 428A, a second subsidiary movement direction 428B, a third subsidiary movement direction 428C, and/or a fourth subsidiary movement direction 428D.

In some embodiments, the one or more subsidiary movement directions are within the first optimization request bandwidth 424. In some embodiments, one or more of the one or more subsidiary movement directions may correspond to one or more limit positions, such as a set of limit positions. Said differently, in some embodiments, the first movement direction may be from the operating point 434 towards an area or section of one or more of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable and the one or more subsidiary movement directions may be from the operating point 434 towards particular positions (e.g., limit positions) within the area associated with the first movement direction.

As shown in block 804, the method 800 may comprise generating, using the master controller, a first optimization request for the first optimization request bandwidth. As described above, in some embodiments, the first optimization request is for the first optimization request bandwidth 424. In some embodiments, the first optimization request comprises one or more items of data representative and/or indicative of a set of optimization inquiries. In some embodiments, the set of optimization inquiries comprises one or more optimization inquiries. For example, the set of optimization inquires may comprise a first optimization inquiry 430A, a second optimization inquiry 430B, a third optimization inquiry 430C, and/or a fourth optimization inquiry 430D.

In some embodiments, one or more of the set of optimization inquiries correspond to one or more subsidiary movement directions in the first optimization request bandwidth 424. For example, the first optimization inquiry 430A may correspond to the first subsidiary movement direction 428A, the second optimization inquiry 430B may correspond to the second subsidiary movement direction 428B, the third optimization inquiry 430C may correspond to the third subsidiary movement direction 428C, and/or the fourth optimization inquiry 430D may correspond to the fourth subsidiary movement direction 428D. In some embodiments, an optimization inquiry comprises a call, transmission, and/or inquiry to the secondary controller 160 to identify at least one limit position that corresponds to a subsidiary movement direction within the first optimization request bandwidth 424.

As shown in block 806, the method 800 may comprise transmitting, using the master controller, the first optimization request to the secondary controller. As described above, in some embodiments, the master controller 140 may be configured to transmit the first optimization request to the secondary controller 160 in response to the master controller 140 generating the first optimization request. As another example, the master controller may be configured to transmit the first optimization request to secondary controller. In some embodiments, the secondary controller 160 is configured to receive the first optimization request from the master controller 140.

As shown in block 808, the method 800 may comprise receiving, at the master controller, a first limit position of a set of limit positions from the secondary controller. As described above, in some embodiments, the master controller 140 is configured to receive one or more limit positions of a set of limit positions from the secondary controller 160 in response to transmitting the first optimization request to the secondary controller 160. For example, the master controller 140 is configured to receive the first limit position 432A of a set of limit positions from the secondary controller 160. In this regard, in some embodiments, the secondary controller 160 is configured to determine one or more limit positions in response to receiving the first optimization request. For example, the secondary controller 160 may be configured to solve one or more computing problems (e.g., an optimization problem) in order to determine one or more limit positions.

As shown in block 810, the method 800 may comprise determining, using the master controller, an estimated feasible operating region based on the first limit position. As described above, in some embodiments, the master controller 140 and/or the secondary controller 160 may be configured to determine the estimated feasible operating region 426 based on the first limit position corresponding to the first optimization request, the first additional limit position corresponding to the second optimization request, and/or one or more other limit positions corresponding to one or more other optimization requests.

In some embodiments, the estimated feasible operating region 426 is an estimation or approximation of the feasible operating region 422. In this regard, in some embodiments, using one or more limit positions received from and/or determined by the secondary controller 160, the master controller 140 and/or the secondary controller 160 is able to determine limits and/or boundaries of operation of the secondary controller 160 that are imposed by constraints associated with the secondary controller 160. For example, using one or more limit positions received from and/or determined by the secondary controller 160, the master controller 140 and/or the secondary controller 160 is able to determine limits and/or boundaries of operation of the secondary controller 160 that are imposed by the low limit 404, low limit 416, the low limit 412, low limit 418, the high limit 408, the high limit 410, the high limit 406, and/or the high limit 414. In some embodiments, based on these determined limits and/or boundaries of operation of the secondary controller 160, the master controller 140 and/or the secondary controller 160 is configured to determine the estimated feasible operating region 426 (e.g., by approximating and/or estimating the feasible operating region 422).

In some embodiments, the estimated feasible operating region 426 is associated with an area. In some embodiments, the area of the estimated feasible operating region 426 may be different than a second area of the feasible operating region 422 (e.g., since the estimated feasible operating region 426 may be an estimate and/or approximation of the feasible operating region 422). For example, the second area of the feasible operating region 422 may be greater than the area of the estimated feasible operating region 426, such as illustrated in FIG. 5. In some embodiments, increasing a width (W) of the first optimization request bandwidth 424 increases the area of the estimated feasible operating region 426. In this regard, in some embodiments, by increasing the width (W) of the first optimization request bandwidth 424, the set of limit positions received from the secondary controller 160 may provide a more accurate representation of one or more limits, such as the first limit. In some embodiments, increasing the area of the estimated feasible operating region 426, causes a difference between the second area of the feasible operating region 422 and the area of the estimated feasible operating region 426 to decrease. Said differently, for example, increasing the area of the estimated feasible operating region 426 causes the estimated feasible operating region 426 to be a more accurate representation of the feasible operating region 422.

In some embodiments, when the first optimization request bandwidth meets or is below a first width threshold, the first optimization request corresponds to a pinched optimization request. In some embodiments, a pinched optimization request is an optimization request that uses a pinched approach for determining one or more limit positions associated with the secondary controller 160. In some embodiments, when the first optimization request bandwidth meets or exceeds a second width threshold, the first optimization request corresponds to a full optimization request. In some embodiments, a full optimization request is an optimization request that uses a full approach for determining one or more limit positions associated with the secondary controller 160.

As shown in block 812, the method 800 may comprise enabling the master controller to perform one or more plant optimization actions based on the estimated feasible operating region. In some embodiments, one or more plant optimization actions may be caused in response to a determination of the estimated feasible operating region 426.

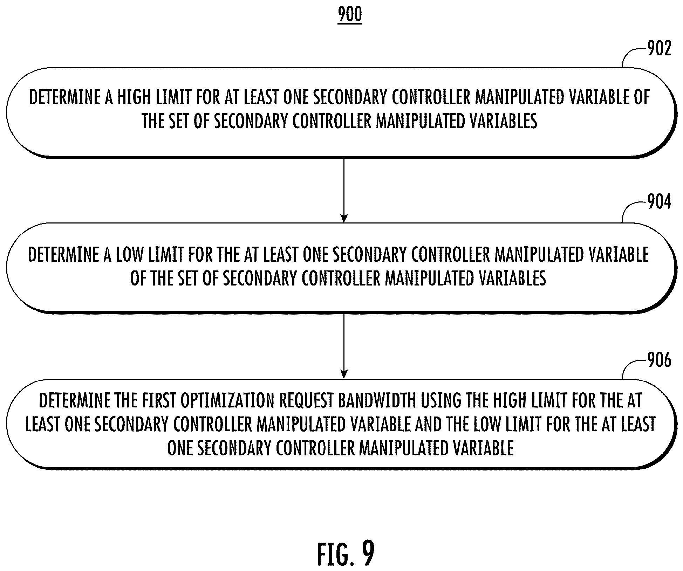

Referring now to FIG. 9, a flowchart providing an example method 900 is illustrated. In this regard, FIG. 9 illustrates operations that may be performed by the master controller 140, the secondary controller 160, the user device 170, the plant 102, and/or the like. In some embodiments, the method 900 includes operations for one approach for determining an optimization request bandwidth. In some embodiments, the example method 900 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 900.

As shown in block 902, the method 900 may comprise determining a high limit for at least one secondary controller manipulated variable of the set of secondary controller manipulated variables. As described above, in some embodiments, determining the first optimization request bandwidth 424 comprises the master controller 140 and/or the secondary controller 160 being configured to determine one of the high limit 408 of the first secondary controller manipulated variable or the high limit 410 of the second secondary controller manipulated variable. Said differently, for example, the master controller 140 and/or the secondary controller 160 may determine a value of the high limit 408 of the first secondary controller manipulated variable or the high limit 410 of the second secondary controller manipulated variable (e.g., a value representing a flow rate of 26 of a physical stream of the plant 102).

As shown in block 904, the method 900 may comprise determining a low limit for the at least one secondary controller manipulated variable of the set of secondary controller manipulated variables. As described above, in some embodiments, determining the first optimization request bandwidth 424 comprises the master controller 140 and/or the secondary controller 160 being configured to determine one of the low limit 404 of the first secondary controller manipulated variable or the low limit 416 of the second secondary controller manipulated variable. Said differently, for example, the master controller 140 and/or the secondary controller 160 may determine a value of the low limit 404 of the first secondary controller manipulated variable or the low limit 416 of the second secondary controller manipulated variable (e.g., a value representing a flow rate of 12 of a physical stream of the plant 102).

As shown in block 906, the method 900 may comprise determining the first optimization request bandwidth using the high limit for the at least one secondary controller manipulated variable and the low limit for the at least one secondary controller manipulated variable. As described above, in some embodiments, the master controller 140 and/or the secondary controller 160 may determine the first optimization request bandwidth 424 as a percentage (e.g., 10%) of a movement distance between the high limit for at least one secondary controller manipulated variable of the set of secondary controller manipulated variables and the low limit for at least one secondary controller manipulated variable of the set of secondary controller manipulated variables.

In some embodiments, a movement distance is representative and/or indicative of a distance between two locations within the master controller manipulated variable space 400. For example, a movement distance may be representative and/or indicative of a distance between the operating point 434 and/or one or more of the low limit 404, low limit 416, the low limit 412, low limit 418, the high limit 408, the high limit 410, the high limit 406, and/or the high limit 414. As another example, a movement distance may be representative and/or indicative of a distance between the operating point 434 and an optimal operating point 436.

In some embodiments, the optimal operating point 436 is the optimal and/or ideal operating point of one or more manipulated variables associated with the master controller 140 and/or the secondary controller 160. For example, the optimal operating point 436 may be the optimal and/or ideal operating point of one or more of the first master controller manipulated variable, the first secondary controller manipulated variable, the second master controller manipulated variable, and/or the second secondary controller manipulated variable (e.g., a current flow rate in a physical stream of the plant 102). Said differently, for example, the optimal operating point 436 may be an optimal and/or ideal operating point of one or more conjoint manipulated variables of the master controller 140 and/or the secondary controller 160 in order to optimize the plant 102, individual physical processing units of the plant 102, individual physical storage units of the plant 102, and/or individual physical streams of the plant 102. In some embodiments, the optimal operating point 436 is represented in master controller manipulated variable space 400 as a set of coordinates, such as (2,2).

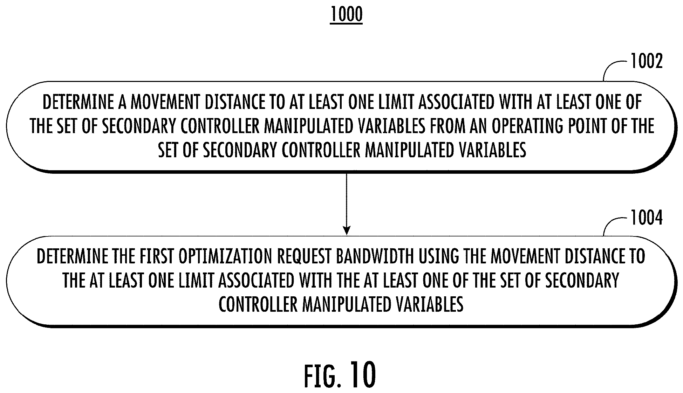

Referring now to FIG. 10, a flowchart providing an example method 1000 is illustrated. In this regard, FIG. 10 illustrates operations that may be performed by the master controller 140, the secondary controller 160, the user device 170, the plant 102, and/or the like. In some embodiments, the method 1000 includes operations for one approach for determining an optimization request bandwidth. In some embodiments, the example method 1000 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1000.

As shown in block 1002, the method 1000 may comprise determining a movement distance to at least one limit associated with at least one of the set of secondary controller manipulated variables from an operating point of the set of secondary controller manipulated variables. As described above, in some embodiments, the at least one limit comprises at least one of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable. In this regard, for example, determining the first optimization request bandwidth 424 comprises determining a movement distance to at least one of the low limit 404 of the first secondary controller manipulated variable, the high limit 408 of the first secondary controller manipulated variable, the low limit 416 of the second secondary controller manipulated variable, and/or the high limit 410 of the second secondary controller manipulated variable from the operating point 434.

As shown in block 1004, the method 1000 may comprise determining the first optimization request bandwidth using the movement distance to the at least one limit associated with the at least one of the set of secondary controller manipulated variables. As described above, in some embodiments, the master controller 140 and/or the secondary controller 160 may determine the first optimization request bandwidth 424 as a percentage (e.g., 20%) of a movement distance to at least one limit associated with at least one of the set of secondary controller manipulated variables from the operating point 434 of the set of secondary controller manipulated variables.

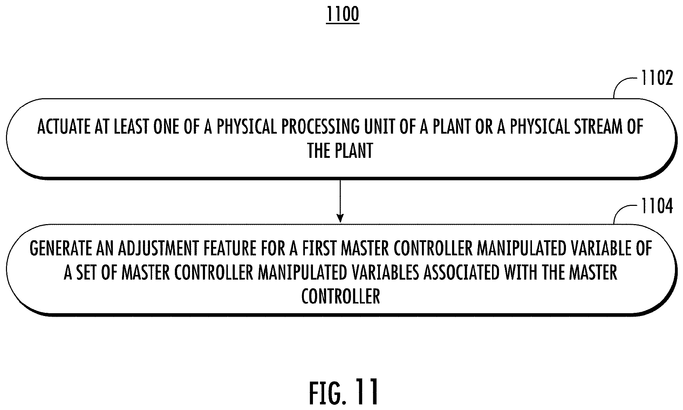

Referring now to FIG. 11, a flowchart providing an example method 1100 is illustrated. In this regard, FIG. 11 illustrates operations that may be performed by the master controller 140, the secondary controller 160, the user device 170, the plant 102, and/or the like. In some embodiments, the method 1100 includes operations enabling the master controller to perform the one or more plant optimization actions. In some embodiments, the example method 1100 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1100.

As shown in block 1102, the method 1100 may comprise actuating at least one of a physical processing unit of a plant or a physical stream of the plant. As described above, in some embodiments, the master controller 140 and/or the secondary controller 160 is configured to enable performance of one or more plant optimization actions in order to optimize the plant 102, individual physical processing units of the plant 102, individual physical storage units of the plant 102, individual physical streams of the plant 102 while managing to respect the constraints of the secondary controller 160, such as by ensuring any plant optimization actions do not cause the operating point 434 to be adjusted such that the operating point 434 is outside of the feasible operating region 422. In some embodiments, enabling the master controller to perform the one or more plant optimization actions causes a reduction in a movement distance between the operating point 434 and the optimal operating point 436. In this regard, for example, enabling performance of one or more plant optimization actions may optimize operation of the plant 102 (e.g., by moving the operating point 434 closer to the optimal operating point 436) while ensuring that various constraints of the secondary controller 160 are not violated.

In some embodiments, enabling performance of one or more plant optimization actions comprises the master controller 140 and/or the secondary controller 160 being configured to actuate a physical processing unit of the plant 102 (e.g., by causing the physical processing unit of the plant 102 to operate, such as by transmitting a signal to the physical processing unit of the plant 102 and/or a computing device associated with the physical processing unit). For example, enabling performance of one or more plant optimization actions may comprise the master controller 140 and/or the secondary controller 160 being configured to actuate a hydrocracking physical processing unit of the plant 102, such as to increase an output of the hydrocracking physical processing unit of the plant 102. Additionally, or alternatively, enabling performance of one or more plant optimization actions comprises the master controller 140 and/or the secondary controller 160 being configured to actuate a physical stream of the plant 102 (e.g., by causing the physical stream of the plant 102 to operate, such as by transmitting a signal to the physical stream of the plant 102 and/or a computing device associated with the physical stream). For example, enabling performance of one or more plant optimization actions may comprise the master controller 140 and/or the secondary controller 160 being configured to actuate an input feed into a hydrocracking physical processing unit of the plant 102, such as to increase input feed into the hydrocracking physical processing unit of the plant 102. In this regard, in some embodiments, actuating at least one of physical processing unit of the plant or physical stream of the plant causes a flow rate in at least one physical stream of the plant to increase or decrease (e.g., an increase and/or decrease in the flow rate of a feed). In some embodiments, actuating a physical processing unit of the plant 102 and/or a physical stream of the plant 102 causes the movement distance between the operating point 434 and the optimal operating point 436 to be reduced.

As shown in block 1104, the method 1100 may comprise generating an adjustment feature for a first master controller manipulated variable of a set of master controller manipulated variables associated with the master controller. As described above, in some embodiments, enabling performance of one or more plant optimization actions may comprise the master controller 140 and/or the secondary controller 160 being configured to generate an adjustment feature for a first master controller manipulated variable of the set of master controller manipulated variables associated with the master controller 140. In some embodiments, an adjustment feature comprises one or more items of data representative and/or indicative of an amount that a master controller manipulated variable should be adjusted in order to optimize plant 102, individual physical processing units of the plant 102, individual physical storage units of the plant 102, individual physical streams of the plant 102 while managing to respect the constraints of the secondary controller 160. For example, an adjustment feature may comprise one or more items of data representative and/or indicative of an amount that a master controller manipulated variable should be adjusted in order to cause the movement distance between the operating point 434 and the optimal operating point 436 to be reduced.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:
determining, using a master controller, a first optimization request bandwidth for a feasible operating region associated with a secondary controller;
generating, using the master controller, a first optimization request for the first optimization request bandwidth, wherein the first optimization request comprises a set of optimization inquiries, wherein a first optimization inquiry of the set of optimization inquiries corresponds to a first subsidiary movement direction and a second optimization inquiry of the set of optimization inquiries corresponds to a second subsidiary movement direction, wherein the first subsidiary movement direction and the second subsidiary movement direction are within the first optimization request bandwidth;
transmitting, using the master controller, the first optimization request to the secondary controller;
receiving, at the master controller, a first limit position of a set of limit positions from the secondary controller;
determining, using the master controller, an estimated feasible operating region based on the first limit position; and
enabling the master controller to perform one or more plant optimization actions based on the estimated feasible operating region.

2. The method of claim 1, wherein at least one of the set of limit positions is defined by one or more of a set of secondary controller manipulated variables associated with the secondary controller.

3. The method of claim 2, wherein determining the first optimization request bandwidth comprises:
determining a high limit for at least one secondary controller manipulated variable of the set of secondary controller manipulated variables;
determining a low limit for the at least one secondary controller manipulated variable of the set of secondary controller manipulated variables; and
determining the first optimization request bandwidth using the high limit for the at least one secondary controller manipulated variable and the low limit for the at least one secondary controller manipulated variable.

4. The method of claim 2, wherein determining the first optimization request bandwidth comprises:
determining a movement distance to at least one limit associated with at least one of the set of secondary controller manipulated variables from an operating point of the set of secondary controller manipulated variables; and
determining the first optimization request bandwidth using the movement distance to the at least one limit associated with the at least one of the set of secondary controller manipulated variables.

5. The method of claim 2, wherein a first secondary controller manipulated variable of the set of secondary controller manipulated variables is a conjoint manipulated variable with a first master controller manipulated variable of a set of master controller manipulated variables associated with the master controller.

6. The method of claim 1, further comprising:
determining a second optimization request bandwidth for the feasible operating region associated with the secondary controller;
generating a second optimization request for the second optimization request bandwidth, wherein the second optimization request comprises an additional set of optimization inquiries, wherein a first additional optimization inquiry of the additional set of optimization inquiries corresponds to a first additional subsidiary movement direction and a second additional optimization inquiry of the additional set of optimization inquiries corresponds to a second additional subsidiary movement direction, wherein the first additional subsidiary movement direction and the second additional subsidiary movement direction are within the second optimization request bandwidth;
transmitting, using the master controller, the second optimization request to the secondary controller;
receiving, at the master controller, a first additional limit position of an additional set of limit positions from the secondary controller; and
determining, using the master controller, the estimated feasible operating region based on the first additional limit position.

7. The method of claim 6, wherein the first optimization request bandwidth corresponds to a first movement direction from an operating point of a set of secondary controller manipulated variables towards at least a first limit associated with at least one secondary controller manipulated variable of the set of secondary controller manipulated variables.

8. The method of claim 7, wherein the second optimization request bandwidth corresponds to a second movement direction from the operating point of the set of secondary controller manipulated variables towards at least a second limit associated with at least one secondary controller manipulated variable of the set of secondary controller manipulated variables or at least one other secondary controller manipulated variable of the set of secondary controller manipulated variables.

9. The method of claim 1, wherein, when the first optimization request bandwidth meets or is below a first width threshold, the first optimization request corresponds to a pinched optimization request, wherein, when the first optimization request bandwidth meets or exceeds a second width threshold, the first optimization request corresponds to a full optimization request.

10. The method of claim 1, wherein increasing a width of the first optimization request bandwidth increases an area of the estimated feasible operating region.

11. The method of claim 1, wherein enabling the master controller to perform the one or more plant optimization actions comprises:
actuating at least one of a physical processing unit of a plant or a physical stream of the plant.

12. The method of claim 11, wherein actuating at least one of the physical processing unit of the plant or the physical stream of the plant causes a flow rate in at least one physical stream of the plant to increase or decrease.

13. The method of claim 1, wherein enabling the master controller to perform the one or more plant optimization actions comprises:
generating an adjustment feature for a first master controller manipulated variable of a set of master controller manipulated variables associated with the master controller.

14. An apparatus comprising memory and one or more processors communicatively coupled to the memory, the one or more processors configured to perform operations comprising:
determining, using a master controller, a first optimization request bandwidth for a feasible operating region associated with a secondary controller;
generating, using the master controller, a first optimization request for the first optimization request bandwidth, wherein the first optimization request comprises a set of optimization inquiries, wherein a first optimization inquiry of the set of optimization inquiries corresponds to a first subsidiary movement direction and a second optimization inquiry of the set of optimization inquiries corresponds to a second subsidiary movement direction, wherein the first subsidiary movement direction and the second subsidiary movement direction are within the first optimization request bandwidth;
transmitting, using the master controller, the first optimization request to the secondary controller;
receiving, at the master controller, a first limit position of a set of limit positions from the secondary controller;
determining, using the master controller, an estimated feasible operating region based on the first limit position; and
enabling the master controller to perform one or more plant optimization actions based on the estimated feasible operating region.

15. A computer program product comprising at least one non-transitory computer-readable storage medium having computer program code stored thereon that, in execution with at least one processor, configures the computer program product for:
determining, using a master controller, a first optimization request bandwidth for a feasible operating region associated with a secondary controller;
generating, using the master controller, a first optimization request for the first optimization request bandwidth, wherein the first optimization request comprises a set of optimization inquiries, wherein a first optimization inquiry of the set of optimization inquiries corresponds to a first subsidiary movement direction and a second optimization inquiry of the set of optimization inquiries corresponds to a second subsidiary movement direction, wherein the first subsidiary movement direction and the second subsidiary movement direction are within the first optimization request bandwidth;
transmitting, using the master controller, the first optimization request to the secondary controller;
receiving, at the master controller, a first limit position of a set of limit positions from the secondary controller;
determining, using the master controller, an estimated feasible operating region based on the first limit position; and
enabling the master controller to perform one or more plant optimization actions based on the estimated feasible operating region.
